# EUROPÄISCHE PATENTSCHRIFT

(11) **EP 3 909 864 B1**
(45) Veröffentlichungstag und Bekanntmachung des Hinweises auf die Patenterteilung: **15.01.2025**
(21) Anmeldenummer: 21173542.8
(22) Anmeldetag: 12.05.2021
(51) Int. Cl.: B64F 5/10, B64C 1/06, B22F 10/00, B33Y 80/00

(54) **VERFAHREN ZUR FERTIGUNG EINES STRUKTURBAUTEILS FÜR EIN FAHRZEUG, INSBESONDERE EIN LUFT- ODER RAUMFAHRZEUG**
METHOD FOR MANUFACTURING A STRUCTURAL COMPONENT FOR A VEHICLE, IN PARTICULAR AN AIRCRAFT OR SPACECRAFT
PROCÉDÉ DE FABRICATION D'UN COMPOSANT DE STRUCTURE D'UN VÉHICULE, EN PARTICULIER UN AÉRONEF OU UN VÉHICULE SPATIAL

(30) Priorität: 14.05.2020 DE 102020206076
(43) Veröffentlichungstag der Anmeldung: 17.11.2021
(73) Patentinhaber: Premium AEROTEC GmbH, 86179 Augsburg (DE)
(72) Erfinder: HAACK, Cord, Augsburg (DE); PAUL,Carsten, Augsburg (DE); HÖRGER, Bernhard, Augsburg (DE)
(74) Vertreter: LKGLOBAL Lorenz & Kopf Patentanwalt Attorney at Law PartG mbB

(56) Entgegenhaltungen:
- WO-A1-2008/110835
- WO-A1-2010/112904
- WO-A1-2010/122325
- DE-A1- 102013 108 111
- GB-A- 2 508 656
- JP-A- 2017 145 501

## Beschreibung

Die vorliegende Erfindung betrifft ein Verfahren zur Fertigung eines Strukturbauteils für ein Fahrzeug, insbesondere ein Luft- oder Raumfahrzeug.

Obwohl in vielfältigen Anwendungen einsetzbar, werden die vorliegende Erfindung sowie die ihr zugrunde liegende Problematik in Bezug auf Passagierflugzeuge näher erläutert. Die beschriebenen Verfahren und Vorrichtungen können jedoch ebenso in unterschiedlichen Fahrzeugen und in allen Bereichen der Transportindustrie, beispielsweise für Straßenfahrzeuge, für Schienenfahrzeuge, für Luftfahrzeuge oder für Wasserfahrzeuge eingesetzt werden.

Viele strukturelle Flugzeugbauteile, welche klassischerweise aus Blechmaterial (z.B. Spante, Stringer etc.) oder als Strangpressprofile (z.B. Querträger, Stützen etc.) hergestellt werden, sind im Betrieb an bestimmten Stellen hohen Punktlasten ausgesetzt. Um die Querschnittstärke dieser Bauteile an derartigen Stellen zu verbessern, werden mitunter Verstärkungen angebracht, beispielsweise mittels Annieten oder durch Verwendung zusätzlicher Frästeile. Grundsätzliche werden hierbei eine Vielzahl von Bohrungen und/oder Nietungen durchgeführt. Alternativ werden Ausgangsmaterialien mitunter in aufwendigen und somit kostenreichen Verfahren auf Sollstärke gebracht. In diesen Fällen wird überschüssiges Material anschließend in zusätzlichen Arbeitsschritten um die entsprechend verstärkt auszubildenden Bereiche herum flächig abgetragen, sodass mit einem hohen Materialverschnitt gearbeitet wird. Es besteht somit grundsätzlich ein Bedarf, einfachere Verfahren zu finden, um insbesondere Metallbauteile hinsichtlich ihres strukturellen Querschnitts zumindest in Bereichen zu verstärken.

Bei generativen bzw. additiven Fertigungsverfahren, auch allgemein als "3D-Druckverfahren" bezeichnet, werden ausgehend von einem digitalisierten geometrischen Modell eines Objekts ein oder mehrere Ausgangsmaterialien sequentiell in Lagen übereinandergeschichtet und ausgehärtet. So wird beispielsweise beim Selektiven Laserschmelzen (SLM) ein Bauteil schichtweise aus einem Modelliermaterial wie beispielsweise einem Metall aufgebaut, indem das Modelliermaterial in Pulverform auf eine Unterlage aufgebracht wird und gezielt durch lokale Laserbestrahlung verflüssigt wird, wodurch sich nach Abkühlung ein festes, zusammenhängendes Bauteil ergibt. 3D-Drucken bietet außergewöhnliche Designfreiheit und erlaubt es unter anderem Objekte mit überschaubaren Aufwand herzustellen, welche mit herkömmlichen Methoden nicht oder nur unter erheblichem Aufwand herstellbar wären. Aus diesem Grund sind 3D-Druckverfahren derzeit weit verbreitet im Industriedesign, in der Automobilindustrie, der Luft- und Raumfahrtindustrie oder generell in der industriellen Produktentwicklung, in der eine ressourceneffiziente Prozesskette zur bedarfsgerechten Klein- und Großserienfertigung individualisierter Bauteile eingesetzt wird.

WO 2010/122325 A1 beschreibt ein Verfahren zum Herstellen einer verstärkten Struktur. Dabei werden zwei Komposit-Bauteile in einem Überlappungsbereich mit Verstärkungsplatten versehen. Die Verstärkungsplatten weisen einen plattenförmigen Körper mit davon abstehenden Spitzen auf und werden in einem additiven Fertigungsverfahren hergestellt. Die abstehenden Spitzen der Verstärkungsplatten werden in die Komposit-Bauteile eingepresst, um die Komposit-Bauteile lokal zu verstärken, damit andere Bauteile daran befestigt werden können.

WO 2008/110835 A1 beschreibt eine Verstärkungsplatte mit mehreren abstehenden Verbindungsspitzen, wobei die Verstärkungsplatte in einem additiven Prozess gefertigt wird. Eine Verbindungsstruktur weist eine Fläche mit mehreren Spitzen auf. Mehrere Lagen werden auf den Spitzen abgelegt und die Verbindungsplatte wird mit einer geschichteten Struktur verbunden.

WO 2010/112904 A1 beschreibt ein Verfahren zum Bilden von hybriden Komponenten aus mindestens zwei metallischen Komponenten. Ein erstes metallisches Bauteil hat eine Verbindungsschnittstelle. Anschließend wir ein zweites metallisches Bauteil an die Verbindungsschnittstelle angeformt, indem metallisches Pulver um die Verbindungsschnittstelle des ersten metallischen Bauteils gelegt und geformt wird, wofür ein Verfahren des heißisostatischen Pressens verwendet wird.

Vor diesem Hintergrund liegt der vorliegenden Erfindung die Aufgabe zugrunde, vereinfachte Lösungen zur Querschnittsverstärkung von strukturellen Fahrzeugbauteilen zu finden.

Erfindungsgemäß wird diese Aufgabe gelöst durch ein Verfahren mit den Merkmalen des Patentanspruchs 1.

Demgemäß ist ein Verfahren zur Fertigung eines Strukturbauteils für ein Fahrzeug, insbesondere ein Luft- oder Raumfahrzeug, vorgesehen. Das Verfahren umfasst additives Fertigen einer Verstärkungsplatte aus einem Metallmaterial, welche auf einer Fügefläche eine Vielzahl von Fügearmen aufweist, die von der Fügefläche abstehen; und Zusammenfügen der Verstärkungsplatte an der Fügefläche mit einer ein Metallmaterial aufweisenden Strukturkomponente zur Bildung des Strukturbauteils, indem die Fügearme derart in die Strukturkomponente eingebracht werden, dass die Fügearme die Strukturkomponente mit der Verstärkungsplatte dauerhaft zusammenhalten. Das Verfahren umfasst, dass die Verstärkungsplatte mit der Strukturkomponente an der Fügefläche verpresst wird. Hierbei ist das Metallmaterial der Strukturkomponente weicher als das Metallmaterial der Verstärkungsplatte.

Zum Verständnis der Erfindung wird ein Strukturbauteil beschrieben, welches mit einem erfindungsgemäßen Verfahren gefertigt ist.

Ferner wird lediglich für das Verständnis der Erfindung eine Befestigungsanordnung beschrieben, welche ein solches Strukturbauteil und eine Trägerstruktur umfasst, wobei die Trägerstruktur auf einer der Fügefläche abgewandten Befestigungsfläche an dem Strukturbauteil befestigt ist.

Weiterhin wird auf ein Luft- oder Raumfahrzeug Bezug genommen, in welchem ein mit dem erfindungsgemäßen Verfahren hergestellte Befestigungsanordnung verwendet werden kann.

Eine der vorliegenden Erfindung zugrunde liegende Idee besteht darin, eine Verstärkungsplatte mittels 3D Druck-Technologie mit einer sehr großen Anzahl, z.B. mehrere hundert oder tausend, von Fügearmen zu versehen, welche als Haftmittel für die Platte an der Strukturkomponente dienen. Damit kann die Strukturkomponente verstärkt werden, ohne dass Bohr- und/oder Nietprozesse hinzugezogen werden müssen. Die Fügearme erfüllen hierbei eine ähnliche Funktion wie die Widerhaken im Falle eines gewöhnlichen Klettverschlusses und werden unmittelbar in das Material der Strukturkomponente eingebracht, wodurch eine feste Verbindung mit dieser hergestellt wird.

Die vorliegende Vorgehensweise erfordert weniger Arbeitsschritte bei hoher Effizienz und ist einfach umsetzbar. Beispielsweise kann die Verstärkungsplatte additiv aus Titan gefertigt werden und bei einem Stanz- und/oder Umformprozess eines Metallrohlings aus einem weicheren Metall zur Konturherstellung direkt mit aufgepresst werden. Hierbei können die Fügearme vollständig in das Material der Strukturkomponente eindringen und den Verschluss mit dieser herstellen. Damit können in erheblichem Maße Kosten, Fertigungsschritte bzw. Fertigungsmittel und Zeit eingespart werden. Dies gilt insbesondere im Falle von Blechmaterialien, deren Stärke lediglich an krafttragenden Stellen höhere Ausgangsdicken haben sollen und die hierfür klassischerweise vielfach flächig abgetragen werden (Materialverschnitt, teures Ausgangsblech).

3D-Druckverfahren sind insbesondere vorteilhaft, da sie die Herstellung von dreidimensionalen Komponenten in urformenden Verfahren ermöglichen, ohne spezielle, auf die äußere Form der Komponenten abgestimmte Fertigungswerkzeuge zu benötigen. Dadurch werden hocheffiziente, Material sparende und Zeit sparende Herstellungsprozesse für Bauteile und Komponenten ermöglicht. 3D-Drucken ermöglich die Fertigung überaus komplexer Geometrien mit überschaubaren Aufwand, welche mit herkömmlichen Methoden praktisch nicht in kosteneffizienter Weise herstellbar wären. Besonders vorteilhaft sind derartige 3D-Druckverfahren für strukturelle Bauteile im Luft- und Raumfahrtbereich, da dort sehr viele verschiedene, auf spezielle Einsatzzwecke abgestimmte Bauteile eingesetzt werden, die in solchen 3D-Druckverfahren mit geringen Kosten, geringer Fertigungsvorlaufzeit und mit geringer Komplexität in den für die Herstellung benötigten Fertigungsanlagen herstellbar sind.

3D-Druckverfahren im Sinne der vorliegenden Anmeldung umfassen alle generativen bzw. additiven Fertigungsverfahren, bei welchen auf der Basis von geometrischen Modellen Objekte vordefinierter Form aus formlosen Materialien wie Flüssigkeiten und Pulvern oder form neutralen Halbzeugen wie etwa band- oder drahtförmigem Material mittels chemischer und/oder physikalischer Prozesse in einem speziellen generativen Fertigungssystem hergestellt werden. 3D-Druckverfahren im Sinne der vorliegenden Anmeldung verwenden dabei additive Prozesse, bei denen das Ausgangsmaterial schichtweise in vorgegebenen Formen sequentiell aufgebaut wird.

Es versteht sich, dass es die vorliegende verwendete 3D-Drucktechnik ermöglicht, die Verstärkungsplatte neben den Fügearmen mit einer Vielzahl weiterer struktureller Funktionsbereiche auszubilden. Beispielsweise können neben den Fügearmen zum Zwecke der Fertigung und/oder Montage Fixierstifte, Bohrungen usw. mit eingedruckt werden. So kann die Verstärkungsplatte mit Bohrungen für Halter oder direkt mit integrierten Haltern ausgebildet werden. Die Verstärkungsplatte kann beispielsweise Gurte als Flansch, Freiflächen zur Anbindung von Bauteilen, Stützgurte und/oder beispielsweise Stanzlöcher für die eigene Positionierung oder die von Anbauteilen umfassen.

Das erfindungsgemäße Verfahren ermöglicht ist, eine Befestigungsanordnung zur Befestigung von Versteifungsstrukturen eines Flugzeugrumpfes zu verwenden. Beispielsweise kann ein Spant oder ein Stringer oder ein anderes Strukturbauteil mit einer integrierten Verstärkungsplatte gefertigt werden, die der Querverstärkung des Spants oder Stringers in einem Anbindungsbereich des Strukturbauteils für die Kopplung an eine Trägerstruktur dient. Beispielsweise kann an einen entsprechend verstärkten Bereich eines Spants ein Querträger für einen Kabinenboden, eine Stützstange und/oder ein Frachtboden angebracht werden, z.B. mittels einem Nietfeld und/oder einer Bolzenverbindung. Erfindungsgemäß kann die Verstärkungsplatte in dem entsprechenden Montagebereich des Strukturbauteils bereits während der Fertigung des entsprechenden Strukturbauteils eingepresst werden. In diesem Fall ist es zur Verstärkung des Montagebereichs somit nicht mehr notwendig, eine entsprechende Verstärkung nachträglich an das Strukturbauteil zu nieten. Das entsprechende Nietfeld und die damit einhergehende Strukturschwächung sowie die zusätzlichen Montageaufwände fallen somit weg. Prinzipiell lassen sich auf Basis der vorliegenden Erfindung sämtliche strukturellen Bauteile eines Fahrzeugs, insbesondere eines Flugzeugs, bereichsweise bzw. lokal verstärken.

Vorteilhafte Ausgestaltungen und Weiterbildungen ergeben sich aus den weiteren Unteransprüchen sowie aus der Beschreibung unter Bezugnahme auf die Figuren. Gemäß der Erfindung ist die Strukturkomponente mit der Verstärkungsplatte an der Fügefläche verpresst.

Die Verstärkungsplatte wird aus einem hochfesten Metallmaterial, wie einem Metall, einer Metalllegierung und/oder einem Metallverbundmaterial, gefertigt bzw. dieses im Bereich der Fügearme aufweisen. Für die Strukturkomponente ist ein weicheres Metallmaterial vorgesehen. Zusätzlich kann deren Material durch Erhitzung oder andere geeignete Verfahrensschritte aufgeweicht werden. Werden nun die Verstärkungsplatte und die Strukturkomponente aufeinandergepresst, so dringen die Fügearme vollständig in das Material der Strukturkomponente ein und sorgen für eine dauerhafte strukturelle Verbindung der beiden Komponenten. Prinzipiell kann es hierbei zu einer Verformung einiger oder aller Fügearme kommen.

Gemäß der Erfindung weist die Strukturkomponente ein Metallmaterial auf.

Beispielsweise kann die Strukturkomponente aus einem Aluminium oder einer Aluminiumlegierung gefertigt sein. Ebenso kann ein Metallverbundmaterial zum Einsatz kommen.

Gemäß einer Weiterbildung kann die Strukturkomponente als Metallstrukturrohling in einem Umformverfahren mit der Verstärkungsplatte zur Bildung des Strukturbauteils verpresst werden.

Beispielsweise kann das Strukturbauteil mittels Stanzen, Gummiumformen (Gummikissen-Pressen) oder superplastischen Umformen hergestellt werden, indem die Verstärkungsplatte mit in eine Konturform eingelegt und im gleichen Arbeitsvorgang zusammen mit der Strukturkomponente verpresst wird.

Alternativ kann es jedoch ebenso vorgesehen sein, die Verstärkungsplatte erst nach dem Umformen der Strukturkomponente in einem zweiten Arbeitsprozess in diese einzupressen.

Gemäß einer Weiterbildung kann die Strukturkomponente lösungsgeglüht verpresst werden.

Der Strukturrohling kann somit zunächst erhitzt und anschließend zusammen mit der Verstärkungsplatte verpresst werden. Das Material der Strukturkomponente wird hierbei aufgeweicht und kann somit die Fügearme der Verstärkungsplatte besonders einfach aufnehmen. Nach Abkühlung härten die derart verbundenen Komponenten zu einem nicht mehr trennbaren Bauteil aus, d.h. die Verstärkungsplatte bildet dann einen integralen Bestandteil des Strukturbauteils.

Gemäß einer Weiterbildung können die Fügearme senkrecht von der Fügefläche abstehend ausgebildet werden.

Beispielsweise kann eine sehr große Anzahl von mehreren hundert oder tausend Fügearmen in äquidistanten Abständen zueinander flächig über die gesamte Fügefläche verteilt werden. Die Fügefläche kann hierbei beispielsweise plan ausgebildet sein. Grundsätzlich sind jedoch ebenso Varianten mit einer gekrümmten und/oder abgestuften Fügefläche denkbar. Neben einer senkrechten Ausrichtung kann es in bestimmten Anwendungen zudem auch vorteilhaft sein, die Fügearme zumindest teilweise mit einer mehr oder weniger stark ausgebildeten Neigung gegenüber der Senkrechten auszubilden.

Gemäß einer Weiterbildung können die Fügearme mit einer hakenförmigen Spitze ausgebildet werden.

Beispielsweise können die Fügearme als Widerhaken ähnlich zu einem gewöhnlichen Klettverschluss ausgebildet sein. In einem anderen Beispiel können die Fügearme von einem Plattengrund auf der Fügefläche der Verstärkungsplatte konisch zu der Spitze zulaufen, z.B. mit einer kreisrunden Kontur. Die Spitze selber kann dann beispielsweise ähnlich zu einer Pfeilspitze oder dergleichen ausgebildet sein, z.B. mit einem überstehenden umlaufenden Kragen.

Gemäß einer Weiterbildung kann das Metallmaterial der Verstärkungsplatte ein hochfestes Aluminium, Eisen und/oder Titan umfassen.

Insbesondere kann die Verstärkungsplatte im Wesentlichen vollständig aus einem entsprechenden Material oder einer entsprechenden Materialkombination gefertigt sein. Moderne additive Verfahren erlauben es, unter anderem, Bauteile aus mehreren Metallen schichtweise aufzubauen, indem beispielsweise mehrere Druckköpfe gleichzeitig bzw. hintereinander unterschiedliche Metalle ablegen oder indem eine entsprechende metallische Pulvermischung verwendet wird.

Gemäß einer Weiterbildung können mehr als hundert Fügearme auf der Fügefläche der Verstärkungsplatte ausgebildet werden. Insbesondere können mehr als tausend Fügearme auf der Fügefläche der Verstärkungsplatte ausgebildet werden.

Beispielsweise kann eine plane Fügefläche mit mehreren tausend Fügearmen bedeckt werden, die ein zweidimensionales Punktmuster ergeben, wobei die Fügearme homogen mit einem festen relativen Abstand zueinander angeordnet sein können. Beispielsweise kann die Verstärkungsplatte eine Dicke von mehreren Millimetern aufweisen, z.B. 3mm, und die Fügearme eine Länge von einem vorgegebenen Bruchteil dieser Dicke haben, z.B. 1mm bis 1,5mm.

Gemäß einer Weiterbildung kann die Verstärkungsplatte auf einer der Fügefläche abgewandten Außenfläche abgestuft ausgebildet werden.

Eine einfache oder mehrfahre Abstufung kann beispielsweise als Voranschluss oder für einen verbesserten Kraftauslauf dienen. In einem konkreten Beispiel kann eine Abstufung Lasten und die damit verbundenen Spannungsspitzen entlang des Bauteils verteilen bzw. verschieben, indem diese von der Abstufungskante bzw. den Abstufungskanten aufgefangen werden.

Die vorliegende Erfindung wird nachfolgend anhand der in den schematischen Figuren angegebenen Ausführungsbeispiele näher erläutert. Es zeigen dabei:
- Fig. 1: schematische perspektivische Schnittansicht eines Luftfahrzeugs mit mehreren Befestigungsanordnungen;
- Fig. 2: schematisches Schnittansicht einer der Befestigungsanordnungen aus Fig. 1 mit einem Strukturbauteil;
- Fig. 3: schematisches Ablaufdiagramm eines Verfahrens zur Fertigung des Strukturbauteils aus Fig. 2 gemäß einer Ausführungsform der Erfindung;
- Fig. 4: schematische detaillierte Schnittansicht einer Verstärkungsplatte für das Strukturbauteil aus Fig. 2;
- Fig. 5: schematische Schnittansicht des Strukturbauteils aus Fig. 2 während eines Fertigungsschritts des Verfahrens aus Fig. 3; und
- Fig. 6: schematische Schnittansicht des Strukturbauteils aus Fig. 5 nach dem Fertigungsschritt.

Die beiliegenden Figuren sollen ein weiteres Verständnis der Ausführungsformen der Erfindung vermitteln. Sie veranschaulichen Ausführungsformen und Ergebnisse des erfindungsgemäßen Verfahrens und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

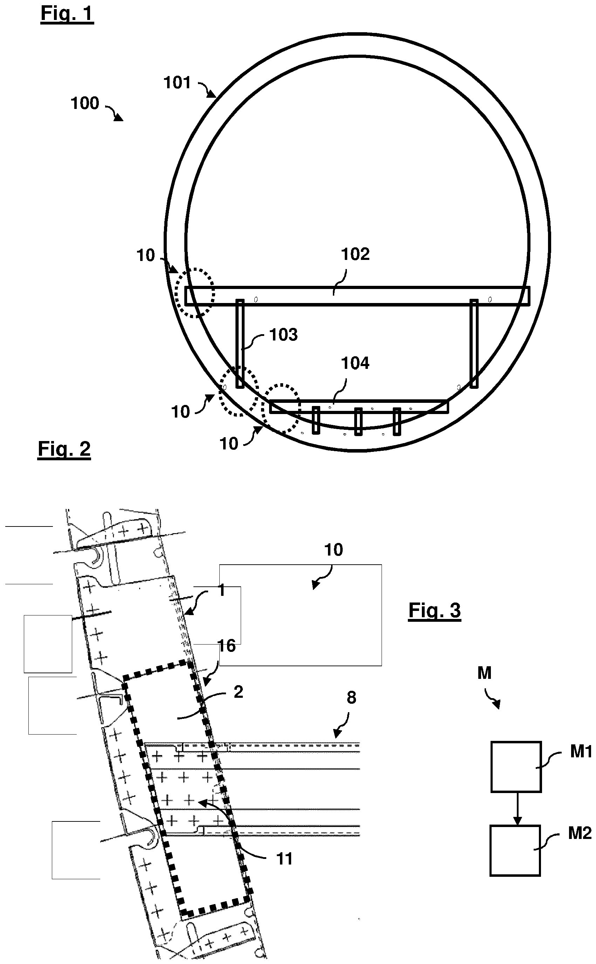

Figur 1 zeigt eine schematische perspektivische Schnittansicht eines Luftfahrzeugs 100 mit mehreren Befestigungsanordnungen 10. Eine der Befestigungsanordnungen 10 ist in Fig. 2 im Detail mit einem darin verwendeten Strukturbauteil 1 dargestellt. Ein Verfahren M zur Herstellung des entsprechende Strukturbauteils 1 wird in Fig. 3 als schematisches Ablaufdiagramm gezeigt.

Das in Fig. 1 dargestellte Luftfahrzeug 100 kann z.B. ein Passagierflugzeug sein. Der Rumpf 101 eines typischen Passagierflugzeugs weist ein starres Gerüst aus Versteifungselementen auf, welches mit einer Außenhaut überzogen ist. Das Gerüst besteht hierbei aus einer Reihe von Spanten, die entsprechend der Form des Rumpfquerschnitts in eine Kreisumfangsrichtung gebogen sind, und einer Vielzahl von Längsträgern/Stringern, die mit den Spanten verbunden sind. Im Inneren des Rumpfes 101 sind mehrere Querträger 102 zur Abstützung eines Kabinenbodens in Längsrichtung des Flugzeugs 100 hintereinander angeordnet, wobei jeder Querträger 102 in einer Querrichtung verläuft und an beiden Enden an den Spanten und/oder Stringern befestigt ist. Die Querträger 102 werden ferner durch vertikale Stützstreben auf dem Rumpf 101 abgestützt. Darüber hinaus ist typischerweise wie in Fig. 1 sichtbar ein Frachtboden 104 unterhalb der Querträger 102 vorgesehen, der ebenfalls mit dem Rumpf 102 verbunden ist bzw. von diesem getragen wird. Alle diese Strukturbauteile sind Teil der sogenannten Primärstruktur und tragen zur Versteifung der Gesamtstruktur des Flugzeugs 100 bei.

Die Strukturbauteile der Primärstruktur werden in der Regel durch Nieten oder ähnliche Mittel im Zuge einer Hauptkomponentenmontage des Flugzeugs 100 aneinander befestigt. Viele dieser Bauteile sind klassischerweise vielfach aus Blechmaterial (z.B. Spante) oder als Strangpressprofil (z.B. Querträger 102, Stützstreben 103) hergestellt. Insbesondere in den Kopplungsbereichen dieser Bauteile sind hohe Punktlast-Einleitungen zu erwarten. Damit die entsprechenden Lasten dauerhaft aufgefangen werden können, werden die obigen Bauteile in den Kopplungsbereichen typischerweise in ihrem Querschnitt verstärkt, indem nachträglich flächige Verstärkungselemente angenietet werden.

Das im Folgenden mit Bezug auf Fig. 3 beschriebene Verfahren M stellt eine vereinfachte Lösung zur Querschnittsverstärkung dieser strukturellen Fahrzeugbauteile zu Verfügung, was die oben erwähnte nachträgliche Verstärkung überflüssig macht. Hierzu macht sich das vorliegende Verfahren unter anderem die Vorteile additiver Fertigungsverfahren zunutze.

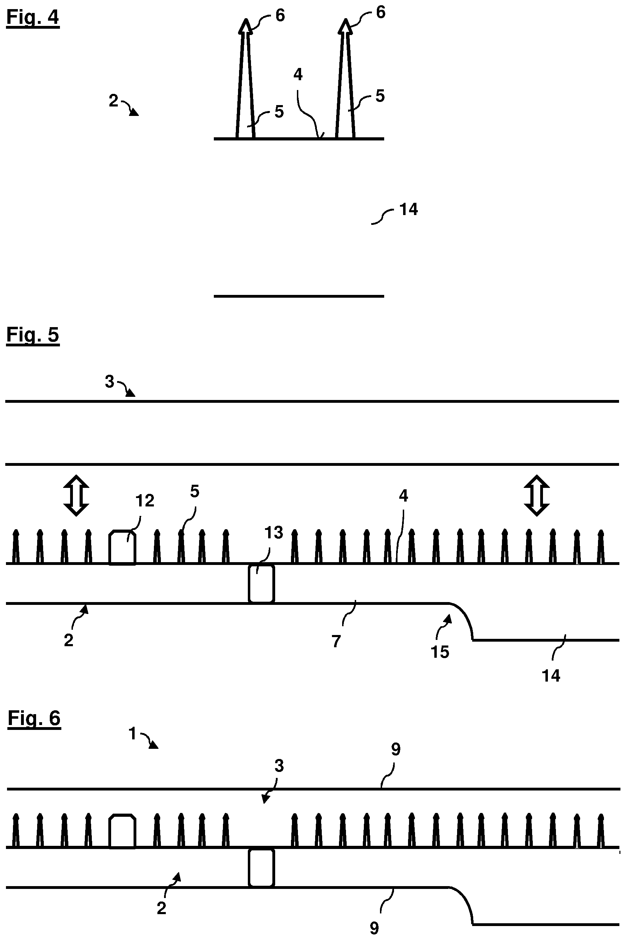

Konkret umfasst das Verfahren M zur Fertigung eines Strukturbauteils 1 unter M1 additives Fertigen einer Verstärkungsplatte 2 aus einem Metallmaterial, welche auf einer Fügefläche 4 eine Vielzahl von Fügearmen 5 aufweist, die von der Fügefläche 4 im Wesentlichen senkrecht abstehen. Eine derartige Verstärkungsplatte 2 ist beispielhaft in Fig. 4 und 5 im Querschnitt zu sehen.

Die Verstärkungsplatte 2 besteht hierbei aus einem hochfesten Metall bzw. einer hochfesten Metalllegierung, z.B. Titan. Prinzipiell können hierbei auch mehrere Metalle in einem Mehrkomponentenverfahren miteinander kombiniert werden.

Konkret zeigt Fig. 4 einen Plattenkörper 14 der Verstärkungsplatte 2, der auf einer Seite mit einer Fügefläche 4 ausgebildet ist, welche die Fügearme 5 trägt. Die Fügearme 5 sind hierbei als Haken ausgebildet, welche von der Fügefläche 4 bis zu einer Spitze 6 konisch mit kreisrunder Kontur zulaufen. Die Spitze 6 selber ist pfeilspitzenartig mit einem umlaufenden Kragen versehen, der seitlich übersteht. Es versteht sich, dass hierbei andere geeignete Formen zur Anwendung kommen könne, z.B. Zahnhaken etc. Der Plattenkörper 14 kann eine Dicke in der Größenordnung von Millimetern aufweisen, z.B. 3mm. Die Fügearme 5 können ebenfalls eine Länge im Bereich von wenigen Millimetern haben, z.B. 1,5mm.

Wie aus Fig. 5 andeutungsweise hervorgeht, umfasst die Verstärkungsplatte 2 eine sehr große Anzahl dieser Fügearme 5. Beispielsweise können mehrere tausend dieser Fügearme 5 in gleichmäßigen Abständen über die gesamte Fügefläche verteilt sein. In dem gezeigten Beispiel sind diese Fügearme 5 identisch ausgebildet. Es versteht sich jedoch, dass die Fügearme 5 in Form und Dimensionierung entlang der Fügefläche 5 variieren können. Die Erfindung macht sich hierbei zunutze, dass auch hochkomplexe Bauteilgeometrien mit Hilfe additiver Fertigungsverfahren ohne besonderen zusätzlichen Aufwand in einem integrierten Prozessablauf herstellbar sind.

Die Fügearme 5 dienen nun in Anlehnung an einen herkömmlichen Klettverschluss dazu, die Verstärkungsplatte 2 dauerhaft mit einer Strukturkomponente 3 zu einem Strukturbauteil 1 zu verbinden. Hierbei dient die Verstärkungsplatte 2 gewisserma-ßen als integrierte Querversteifung, welche bereits während der Fertigung des Strukturbauteils 1 als integraler Bestandteil in dieses eingebracht wird.

Wieder bezugnehmend auf Fig. 2 umfasst das Verfahren M demensprechend unter M2 als weiteren Schritt Zusammenfügen der Verstärkungsplatte 2 an der Fügefläche 4 mit einer Strukturkomponente 3 zur Bildung des Strukturbauteils 1, indem die Fügearme 5 derart in die Strukturkomponente 3 eingebracht werden, dass die Fügearme 5 die Strukturkomponente 3 mit der Verstärkungsplatte 2 dauerhaft zusammenhalten.

In dem konkret gezeigten Beispiel handelt es sich bei der Strukturkomponente 3 um einen Metallstrukturrohling, z.B. aus Aluminium, welcher mit Hilfe einer Umformtechnologie wie beispielsweise Stanzen, Gummiumformen oder superplastischem Umformen mit der Verstärkungsplatte 2 in einem Arbeitsvorgang verpresst wird (vgl. Pfeile in Fig. 5). Hierzu wird die Verstärkungsplatte 2 zu der Strukturkomponente 3 mit in die entsprechende Konturform gelegt, wobei die Strukturkomponente 3 zum Aufweichen lösungsgeglüht wird. Aufgrund der Druckbeaufschlagung bei dem sich anschließenden Pressvorgang werden die Fügearme 5 in das aufgeweichte Material der Strukturkomponente 3 entlang der Fügefläche 4 eingeprägt. Die pfeilförmigen Spitzen 6 der Fügearme 5 dienen hierbei als Widerhaken, welche die Verstärkungsplatte 2 in der Strukturkomponente 3 gewissermaßen festklemmen. Prinzipiell können die Fügearme 5 dabei zusätzlich mehr oder weniger stark verformt werden. In jedem Fall bleibt nach dem Entformen und der Abkühlung/Aushärtung ein einstückiges Strukturbauteil 1 zurück, dessen Ausgangskomponenten nachträglich nicht mehr trennbar sind, da die Verstärkungsplatte 2 nun einen integralen Bestandteil des Strukturbauteils 1 bildet. Fig. 6 zeigt das derart gefertigte Bauteil in einem schematischen Querschnitt.

Die Gestaltungsmöglichkeiten typischer additiver Verfahren machen es weiterhin möglich, unterschiedliche Hilfsstrukturen direkt mit in die Verstärkungsplatte 2 einzuformen. Rein beispielhaft zeigen Fig. 5 und 6 einen Fixierstift 12, welcher beispielsweise als Fertigungs- und/oder Montagehilfe dienen kann, und eine Bohrung 13, in welche beispielsweise Halter, Stifte oder dergleichen zur Positionierung dieses oder weiterer Bauteile eingebracht werden können.

Ferner ist in Fig. 5 und 6 zu sehen, dass die Verstärkungsplatte 2 auf einer der Fügefläche 5 abgewandten Außenseite 7 mit einer oder mehreren Abstufungen 15 gefertigt ist, d.h. mit einer variablen Querschnittsstärke ausgebildet ist. Derartige Abstufungen 15 können beispielsweise zur Verteilung von Lasten bzw. Ladungsspitzen entlang des fertigen Strukturbauteils 1 dienen.

Dem Fachmann wird sich hierbei erschließen, dass die Fügefläche 4 keineswegs in allen Anwendungen als plane Fläche ausgebildet sein muss (wie es in Fig. 5 und 6 vereinfachend dargestellt ist). Vielmehr kann die Fügefläche 4 auch abgestuft und/oder gekrümmt sein und/oder einen komplexeren Verlauf aufweisen. Ebenso können die Fügearme 5 gegenüber der Fügefläche 4 geneigt ausgebildet werden, z.B. um in eine entsprechend geformte Strukturkomponente 3 einzudringen.

An ein derart hergestelltes Strukturbauteil 1 kann nun eine Trägerstruktur 8 über den mit der Verstärkungsplatte 2 querverstärkten Bereich zur Bildung einer der Befestigungsanordnungen 10 angekoppelt werden. In dem Beispiel der Fig. 2 ist das Strukturbauteil 1 als Spant ausgebildet, welcher die Verstärkungsplatte 2 in einem Ankopplungsbereich 16 enthält. Die Verstärkungsplatte 2 wurde hierbei als flächige Verstärkung entlang einer Querfläche des Spants in diesen integriert. Eine der Fügefläche 5 der Verstärkungsplatte 2 abgewandte Befestigungsfläche (Außenfläche) 9 des Spants kann nun als Ankopplungsfläche für die Trägerstruktur 8 dienen. In der beispielhaften Ausführung in Fig. 2 handelt es sich bei der Trägerstruktur 8 um einen Querträger 102 des Flugzeugrumpfes 101, welcher zentral über der Verstärkungsplatte 2 an den Spant angenietet ist (vgl. Nietverbindungen 11 in Fig. 2). Mit Hilfe der Erfindung kann ein Spantrohling (d.h. eine Strukturkomponente 3) mit einer Dicke von wenigen Millimetern, z.B. ca. 1,5mm, mit Hilfe einer Verstärkungsplatte 2 von mehreren Millimetern in bestimmten Bereichen auf ein mehrfaches oder vielfaches seiner ursprünglichen Querstärke aufgedickt werden.

Es versteht sich, dass die Trägerstruktur 8 auch anderweitig mit dem Strukturbauteil 1 im Bereich der Verstärkungsplatte 2 gekoppelt sein kann. Beispielsweise kann alternativ oder zusätzlich eine Verbindung auf der Basis von Exzenterbolzen vorgesehen sein. Da die Verstärkungsplatte 2 mittels Umformtechnik bereits während der Fertigung mit in den Spant, d.h. das Strukturbauteil 1, eingepresst wurde, kann die Trägerstruktur 8 direkt und ohne weitere Maßnahmen (z.B. Anbringung von Querverstärkungen) an dem Strukturbauteil 1 befestigt werden. Die klassischerweise notwendigen aufwendigen Nietfelder in der Umgebung des Ankopplungsbereiches 16 werden somit vermieden. Ebenso können Spantverstärkungen oder dergleichen wegfallen, wenn der Spant über diesen Bereich fortlaufen sollte. Entsprechend zu Fig. 2 können weitere Trägerstrukturen 8 des Flugzeugs 100 an entsprechend verstärkten Strukturbauteilen 1 befestigt sein, z.B. die Stützstangen 103 und der Frachtraumboden 104.

In der vorangegangenen detaillierten Beschreibung sind verschiedene Merkmale zur Verbesserung der Stringenz der Darstellung in einem oder mehreren Beispielen zusammengefasst worden.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen.

### Bezugszeichenliste

- 1: Strukturbauteil
- 2: Verstärkungsplatte
- 3: Strukturkomponente
- 4: Fügefläche
- 5: Fügearm
- 6: Spitze
- 7: Außenfläche
- 8: Trägerstruktur
- 9: Befestigungsfläche
- 10: Befestigungsanordnung
- 11: Nietverbindung
- 12: Fixierstift
- 13: Bohrung
- 14: Plattenkörper
- 15: Abstufung
- 16: Ankopplungsbereich
- 100: Luftfahrzeug
- 101: Rumpf
- 102: Querträger
- 103: Stützstange
- 104: Frachtboden
- M: Verfahren
- M1, M2: Verfahrensschritte

### Bezugszeichenliste

- 1: Strukturbauteil
- 2: Verstärkungsplatte
- 3: Strukturkomponente
- 4: Fügefläche
- 5: Fügearm
- 6: Spitze
- 7: Außenfläche
- 8: Trägerstruktur
- 9: Befestigungsfläche
- 10: Befestigungsanordnung
- 11: Nietverbindung
- 12: Fixierstift
- 13: Bohrung
- 14: Plattenkörper
- 15: Abstufung
- 16: Ankopplungsbereich
- 100: Luftfahrzeug
- 101: Rumpf
- 102: Querträger
- 103: Stützstange
- 104: Frachtboden
- M: Verfahren
- M1, M2: Verfahrensschritte

## Patentansprüche

1. Verfahren (M) zur Fertigung eines Strukturbauteils (1) für ein Fahrzeug, insbesondere ein Luft- oder Raumfahrzeug (100), mit:
additives Fertigen (M1) einer Verstärkungsplatte (2) aus einem Metallmaterial, welche auf einer Fügefläche (4) eine Vielzahl von Fügearmen (5) aufweist, die von der Fügefläche (4) abstehen; und
Zusammenfügen (M2) der Verstärkungsplatte (2) an der Fügefläche (4) mit einer ein Metallmaterial aufweisenden Strukturkomponente (3) zur Bildung des Strukturbauteils (1), indem die Fügearme (5) derart in die Strukturkomponente (3) eingebracht werden, dass die Fügearme (5) die Strukturkomponente (3) mit der Verstärkungsplatte (2) dauerhaft zusammenhalten;
**dadurch gekennzeichnet, dass**
die Verstärkungsplatte (2) mit der Strukturkomponente (3) an der Fügefläche (4) verpresst wird;
das Metallmaterial der Strukturkomponente (3) weicher ist als das Metallmaterial der Verstärkungsplatte (2) und die Fügearme (5) vollständig in das Metallmaterial der Strukturkomponente (3) eindringen und den Verschluss mit dieser herstellen.

2. Verfahren (M) nach Anspruch 1, wobei die Strukturkomponente (3) als Metallstrukturrohling in einem Umformverfahren mit der Verstärkungsplatte (2) zur Bildung des Strukturbauteils (1) verpresst wird.

3. Verfahren (M) nach Anspruch 2, wobei die Strukturkomponente (3) lösungsgeglüht verpresst wird.

4. Verfahren (M) nach einem der Ansprüche 1 bis 3, wobei die Fügearme (5) senkrecht von der Fügefläche (4) abstehend ausgebildet werden.

5. Verfahren (M) nach einem der Ansprüche 1 bis 4, wobei die Fügearme (5) mit einer hakenförmigen Spitze (6) ausgebildet werden.

6. Verfahren (M) nach einem der Ansprüche 1 bis 5, wobei das Metallmaterial der Verstärkungsplatte (2) zumindest eines aus der Gruppe von hochfestem Aluminium, Eisen und Titan umfasst.

7. Verfahren (M) nach einem der Ansprüche 1 bis 6, wobei mehr als hundert Fügearme (5) auf der Fügefläche (4) der Verstärkungsplatte (2) ausgebildet werden.

8. Verfahren (M) nach einem der Ansprüche 1 bis 7, wobei die Verstärkungsplatte (2) auf einer der Fügefläche (4) abgewandten Außenfläche (7) abgestuft ausgebildet wird.

## Claims

1. A method (M) for manufacturing a structural part (1) for a vehicle, in particular an aircraft or spacecraft (100), with:
additive manufacturing (M1) of a reinforcing plate (2) of a metal material comprising on a joining surface (4) a plurality of joining arms (5) projecting from the joining surface (4); and
joining together (M2) of the reinforcing plate (2) at the joining surface (4) with a structural component (3) comprising a metal material to form the structural part (1) by inserting the joining arms (5) into the structural component (3) in such a way that the joining arms (5) permanently hold the structural component (3) together with the reinforcing plate (2);
**characterised in that**
the reinforcing plate (2) is pressed together with the structural component (3) at the joining surface (4);
the metal material of the structural component (3) is softer than the metal material of the reinforcing plate (2) and the joining arms (5) penetrate completely into the metal material of the structural component (3) and create the joint with it.

2. The method (M) according to claim 1, wherein the structural component (3) is pressed as a metal structural blank in a forming process with the reinforcing plate (2) to form the structural component (1).

3. The method (M) according to claim 2, wherein the structural component (3) is solution-annealed and moulded.

4. The method (M) according to one of claims 1 to 3, wherein the joining arms (5) are formed to project vertically from the joining surface (4).

5. The method (M) according to one of claims 1 to 4, wherein the joining arms (5) are formed with a hook-shaped tip (6).

6. The method (M) according to any one of claims 1 to 5, wherein the metal material of the reinforcing plate (2) comprises at least one of high-strength aluminium, iron and titanium.

7. The method (M) according to any one of claims 1 to 6, wherein more than one hundred joining arms (5) are formed on the joining surface (4) of the reinforcing plate (2).

8. The method (M) according to one of claims 1 to 7, wherein the reinforcing plate (2) is formed in a stepped manner on an outer surface (7) facing away from the joining surface (4).

## Revendications

1. Un procédé (M) pour fabriquer d'un élément structurel (1) pour un véhicule, notamment un aéronef ou un véhicule spatial (100), comprenant :
fabriquer additive (M1) d'une plaque de renforcement (2) en un matériau métallique, qui présente sur une surface d'assemblage (4) une pluralité de bras d'assemblage (5) qui font saillie de la surface d'assemblage (4) ; et
assembler (M2) de la plaque de renforcement (2) au niveau de la surface d'assemblage (4) avec un composant structurel (3) présentant un matériau métallique pour former l'élément structurel (1), en introduisant les bras d'assemblage (5) dans le composant structurel (3) de telle sorte que les bras d'assemblage (5) maintiennent durablement ensemble le composant structurel (3) et la plaque de renforcement (2) ;
**caractérisé en ce que**
la plaque de renforcement (2) est comprimée avec le composant structurel (3) au niveau de la surface d'assemblage (4) ;
le matériau métallique du composant structurel (3) est plus mou que le matériau métallique de la plaque de renforcement (2) et les bras d'assemblage (5) pénètrent complètement dans le matériau métallique du composant structurel (3) et réalisent la fermeture avec celui-ci.

2. Le procédé (M) selon la revendication 1, dans lequel le composant structurel (3) est pressé sous forme d'une ébauche de structure métallique dans un procédé de formage avec la plaque de renforcement (2) pour former l'élément structurel (1).

3. Le procédé (M) selon la revendication 2, dans lequel le composant structurel (3) est comprimé par recuit de mise en solution.

4. Le procédé (M) selon l'une quelconque des revendications 1 à 3, dans lequel les bras d'assemblage (5) sont réalisés en saillie perpendiculairement à la surface d'assemblage (4).

5. Le procédé (M) selon l'une quelconque des revendications 1 à 4, dans lequel les bras d'assemblage (5) sont formés avec une pointe (6) en forme de crochet.

6. Le procédé (M) selon l'une quelconque des revendications 1 à 5, dans lequel le matériau métallique de la plaque de renforcement (2) comprend au moins un élément choisi dans le groupe constitué par l'aluminium à haute résistance, le fer et le titane.

7. Le procédé (M) selon l'une quelconque des revendications 1 à 6, dans lequel plus de cent bras d'assemblage (5) sont formés sur la surface d'assemblage (4) de la plaque de renfort (2).

8. Le procédé (M) selon l'une quelconque des revendications 1 à 7, dans lequel la plaque de renforcement (2) est formée en gradins sur une surface extérieure (7) opposée à la surface d'assemblage (4).
